# EUROPEAN PATENT APPLICATION

(11) **EP 3 767 040 A1**
(43) Date of publication of application: **20.01.2021**
(21) Application number: 20185355.3
(22) Date of filing: 10.07.2020
(51) Int. Cl.: E02F 9/20, E02F 9/26

(54) **WORK MACHINE AND WORK MACHINE SUPPORT SERVER**

(30) Priority: 17.07.2019 JP 2019132110
(71) Applicant: Kobelco Construction Machinery Co., Ltd., Hiroshima 731-5161 (JP)
(72) Inventor: Yamasaki, Takanori, Hiroshima-shi Hiroshima 731-5161 (JP); Eita, Akihiko, Hiroshima-shi Hiroshima 731-5161 (JP)
(74) Representative: Schön, Christoph

(57) **Abstract**

Provided is a work machine that continues to provide suitable images for an operator of an excavator who performs work while watching captured images taken by an imaging unit mounted on an unmanned aircraft. The degree of possibility of contact between a working mechanism 140 and an unmanned aircraft 40 is recognized on the basis of the relative position of the unmanned aircraft 40 with reference to the working mechanism 140. If it is recognized that the contact possibility is low, then the unmanned aircraft 40 is permitted to continue to stay in place.

## Description

### BACKGROUND OF THE INVENTION

### 1. Field of the Invention

The present invention relates to a work machine such as a building demolition machine.

### 2. Description of the Related Art

There has been proposed a technology in which a camera attached to an autonomous flying body is used to image a space that cannot be imaged by a camera attached to an upper pivoting body of an excavator (refer to, for example, Patent Document 1).

### Prior Art Document

### Patent Document

Patent Document 1: WO2017/131194

Meanwhile, if collision avoidance control is performed more than necessary despite a low possibility of collision between the flying body and the excavator, then a captured image would be difficult for an operator of the excavator to watch when the operator performs work, such as excavation, while watching the captured images obtained by an imaging device mounted on the flying body.

### SUMMARY OF THE INVENTION

An object of the present invention is, therefore, to provide a work machine that continues to provide suitable images for an operator of an excavator who performs work while watching captured images obtained by an imaging device mounted on an unmanned aircraft.

The present invention relates to a work machine including: a lower traveling body; an upper pivoting body that can pivot with respect to the lower traveling body; a working mechanism that extends from the upper pivoting body; and a control unit that controls an operation mode of each of the lower traveling body, the upper pivoting body, and the working mechanism. Further, the present invention relates to a work machine support server that has a function to communicate with each of the work machine and an unmanned aircraft.

In the work machine according to the present invention, the control unit includes: a contact possibility recognition element that recognizes a degree of possibility of contact between the working mechanism and the unmanned aircraft according to a relative position of the unmanned aircraft with reference to the working mechanism; and a stay permission notification element that notifies the unmanned aircraft of a permission to continue to stay in place in a case where the contact possibility recognition element recognizes that the contact possibility is low.

The work machine having the configuration notifies the unmanned aircraft of the permission for continuing to stay in place, thus making it possible to continue to provide suitable images for an operator of an excavator who performs work while watching captured images taken by an imaging device mounted on the unmanned aircraft. The term "to recognize" refers to a concept that encompasses determining, designating or estimating the degree of possibility of contact on the basis of the relative position of the unmanned aircraft with reference to the working mechanism, and receiving a result of the determination or reading from a storage unit.

In the work machine according to the present invention, preferably, the contact possibility recognition element recognizes a state of change in the possibility of contact between the working mechanism and the unmanned aircraft based on the state of change in the relative position of the unmanned aircraft with reference to the working mechanism according to the operation mode of at least one of the lower traveling body, the upper pivoting body, and the working mechanism, and the stay permission notification element notifies the unmanned aircraft of a permission to continue to stay in place in a case where the contact possibility recognition element recognizes that the contact possibility will be low.

According to the work machine having the configuration, if it is recognized that the possibility of contact between the working mechanism and the unmanned aircraft will be low in the future even when the operation mode of the working mechanism or the like is maintained, then the unmanned aircraft is notified of the permission to continue to stay in place. This makes it possible to continue to provide suitable images to the operator of the excavator who performs work while watching captured images taken by the imaging device mounted on the unmanned aircraft.

In the work machine according to the present invention, preferably, the contact possibility recognition element recognizes a spread state of a reference space encompassing a space that the working mechanism occupies or passes through in a specified period of time based on the operation mode of at least one of the lower traveling body, the upper pivoting body, and the working mechanism in the specified period of time, and recognizes that the contact possibility is low if a real space position of the unmanned aircraft is not included in the reference space.

According to the work machine having the configuration, when the working mechanism or the like is operated in a specified period of time, the possibility of contact between the working mechanism and the unmanned aircraft during the specified period of time is estimated in advance, and then the unmanned aircraft is notified of the permission to continue to stay in place, thus making it possible to continue to provide suitable images for the operator of the excavator who performs work while watching captured images taken by the imaging device mounted on the unmanned aircraft.

A work machine support server in accordance with the present invention includes: a contact possibility recognition element which recognizes a degree of possibility of contact between the working mechanism and the unmanned aircraft based on a relative position of the unmanned aircraft with reference to the working mechanism according to communication with at least one of the work machine and the unmanned aircraft; and a stay permission notification element that notifies the unmanned aircraft of a permission to continue to stay in place in a case where the contact possibility recognition element recognizes that the contact possibility is low.

According to the work machine support server having the configuration, if it is recognized that the possibility of contact between the working mechanism and the unmanned aircraft is low, then the unmanned aircraft is notified of the permission to continue to stay in place. This makes it possible to continue to provide suitable images for the operator of the excavator who performs work while watching captured images taken by the imaging device mounted on the unmanned aircraft.

### BRIEF DESCRIPTION OF THE DRAWINGS

FIG. 1 is an explanatory diagram illustrating the configurations of a work machine and an unmanned aircraft as one embodiment of the present invention;
FIG. 2 is an explanatory diagram illustrating the configuration of an operating mechanism of the work machine;
FIG. 3 is an explanatory diagram illustrating the functions of the work machine as one embodiment of the present invention;
FIG. 4 is an explanatory diagram illustrating an image output mode in an image output unit;
FIG. 5 is an explanatory diagram illustrating a method for recognizing the degree of possibility of contact between the work machine and the unmanned aircraft;
FIG. 6 is an explanatory diagram illustrating a first control mode of the working mechanism or the like according to the degree of possibility of contact with the unmanned aircraft;
FIG. 7 is an explanatory diagram illustrating a second control mode of the working mechanism or the like according to the degree of possibility of contact with the unmanned aircraft; and
FIG. 8 is an explanatory diagram illustrating the configuration of a work machine support server as one embodiment of the present invention.
FIG. 9 is an explanatory diagram illustrating the configuration of a work machine and an unmanned aircraft as another embodiment of the present invention.

### DESCRIPTION OF THE PREFERRED EMBODIMENTS

### (Configuration)

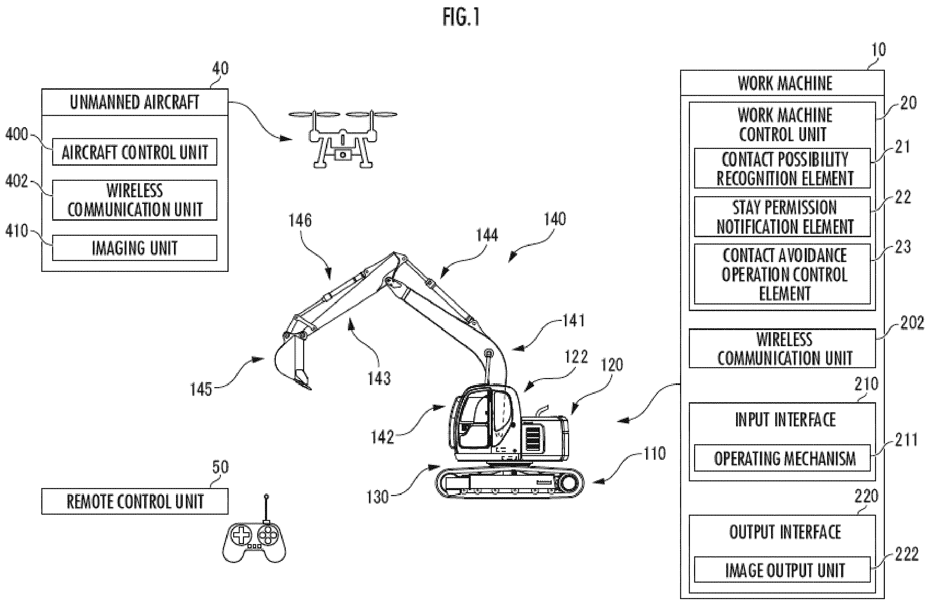

A work machine 10 as one embodiment of the present invention illustrated in FIG. 1 performs predetermined work in collaboration with an unmanned aircraft 40. The work machine 10 is, for example, a crawler excavator (construction machine), and includes a crawler type lower traveling body 110 and an upper pivoting body 120 pivotably mounted on the lower traveling body 110 through the intermediary of a pivoting mechanism 130. A cab (driver compartment) 122 is provided on the left front side of the upper pivoting body 120. A work attachment serving as a working mechanism 140 is provided at the front center of the upper pivoting body 120.

The working mechanism 140 includes a boom 141 liftably attached to the upper pivoting body 120, an arm 143 rotatably connected to the distal end of the boom 141, and a bucket 145 rotatably connected to the distal end of the arm 143. Attached to the working mechanism 140 are a boom cylinder 142, an arm cylinder 144, and a bucket cylinder 146 composed of expandable hydraulic cylinders. In place of the bucket 145, other attachment such as a nibbler may be attached to the distal end of the arm 143.

The boom cylinder 142 is interposed between the boom 141 and the upper pivoting body 120 so that the boom cylinder 142 expands or contracts by receiving the supply of hydraulic oil thereby to cause the boom 141 to pivot in an upward or downward direction. The arm cylinder 144 is interposed between the arm 143 and the boom 141 such that the arm cylinder 144 expands or contracts by receiving the supply of hydraulic oil thereby to cause the arm 143 to pivot around a horizontal axis with respect to the boom 141. The bucket cylinder 146 is interposed between the bucket 145 and the arm 143 such that the bucket cylinder 146 expands or contracts by receiving the supply of hydraulic oil thereby to cause the bucket 145 to pivot around the horizontal axis with respect to the arm 143.

The work machine 10 includes a work machine control unit 20, a wireless communication unit 202, an input interface 210, and an output interface 220. The work machine control unit 20 is composed of an arithmetic processing unit (a single-core processor, a multi-core processor, or a processor core that constitutes the single-core processor or the multi-core processor), which reads necessary data and software from a memory or other storage device, and executes arithmetic processing on the data according to the software.

The work machine control unit 20 includes a contact possibility recognition element 21 and a stay permission notification element 22. The contact possibility recognition element 21 recognizes the degree of possibility of contact between the working mechanism 140 and the unmanned aircraft 40 on the basis of the relative position of the unmanned aircraft 40 with reference to the working mechanism 140. If the contact possibility recognition element 21 recognizes that the contact possibility is low, then the stay permission notification element 22 notifies the unmanned aircraft of a permission to continue to stay in place.

An operating mechanism 211 constituting the input interface 210 includes a travel operating unit, a pivoting operating unit, a boom operating unit, an arm operating unit, and a bucket operating unit. Each of the operating units has an operating lever subjected to rotational operations. The operating lever (travel lever) of the travel operating unit is operated to move the lower traveling body 110. The travel lever may also serve as a travel pedal. For example, a travel pedal fixed to the base or lower end of the travel lever may be provided. The operating lever of the pivoting operating unit (pivoting lever) is operated to move a hydraulic pivoting motor constituting the pivoting mechanism 130. The operating lever of the boom operating unit (boom lever) is operated to move a boom cylinder 142. The operating lever of the arm operating unit (arm lever) is operated to move an arm cylinder 144. An operating lever (bucket lever) of the bucket operating unit is operated to move a bucket cylinder 146.

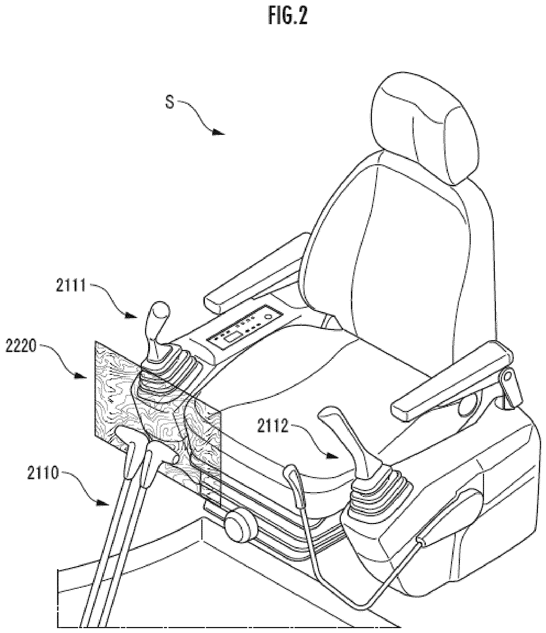

The operating levers constituting the operating mechanism 211 are placed, for example, around a seat S for an operator to sit on, as illustrated in FIG. 2. The seat S is in the form of a high-back chair with armrests, but may be in any form that allows an operator to sit thereon, such as a low-back chair without a headrest, or a chair without a backrest.

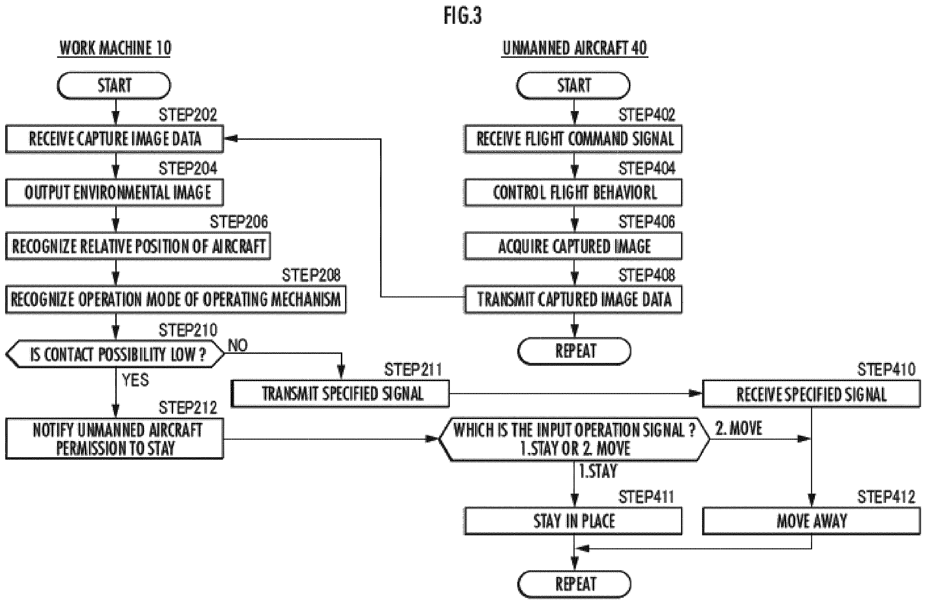

A pair of left and right travel levers 2110 corresponding to the left and right crawlers are placed side by side in front of the seat S. A single operating lever may serve as a plurality of operating levers. For example, a right operating lever 2111 provided in front of a right frame of the seat S illustrated in FIG. 3 may function as a boom lever when operated in a longitudinal direction, and may function as a bucket lever when operated in a lateral direction. Similarly, a left operating lever 2112 provided in front of a left frame of the seat S illustrated in FIG. 3 may function as an arm lever when operated in the longitudinal direction, and may function as a pivoting lever when operated in the lateral direction. The lever pattern may be arbitrarily changed according to an operating instruction of the operator.

An image output unit 222 constituting the output interface 220 is placed, for example, in front of the seat S, as illustrated in FIG. 2. The image output unit 222 may be further provided with a speaker (audio output device).

The unmanned aircraft 40 includes an aircraft control unit 400, a wireless communication unit 402, and an imaging unit 410. The unmanned aircraft 40 is a rotorcraft, and includes a plurality (e.g., four, six, or eight) of blades, an electric motor (actuator) for rotating the plurality of blades, a battery for supplying power to the motor, and the like. The unmanned aircraft 40 can be operated through a remote control unit 50. For example, the remote control unit of the unmanned aircraft 40 may be constituted by the input interface 210.

### (Function)

In the unmanned aircraft 40, a flight command signal transmitted from the remote control unit 50 is received by the aircraft control unit 400 through the wireless communication unit 402 (STEP402 of FIG. 3). The aircraft control unit 400 controls the actuator (the electric motor) and the rotational movement of each of the plurality of blades powered by the actuator (STEP404 of FIG. 3). This enables the unmanned aircraft 40 to fly, ascend or descend on the spot, or remain (stay) in the air by an airflow generated by the rotation of the plurality of blades.

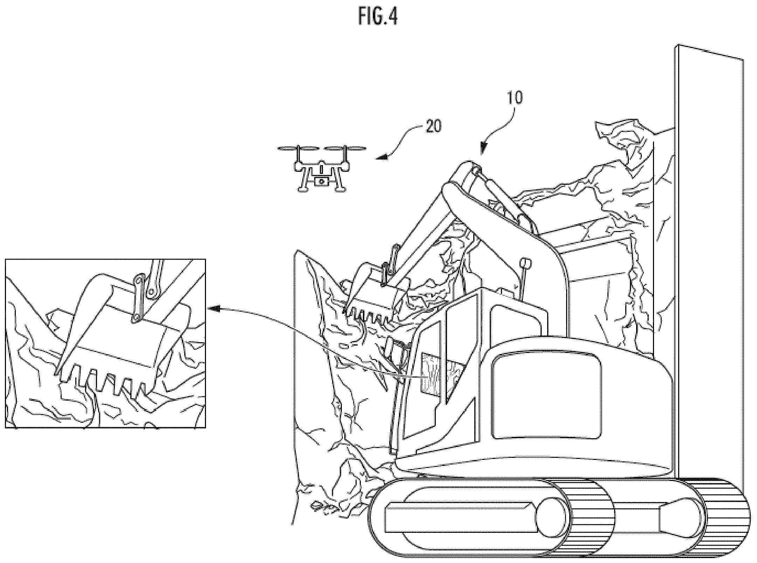

In the unmanned aircraft 40, the imaging unit 410 acquires a captured image that includes a specific portion of the working mechanism 140, such as the bucket 145, which is the distal end portion of an attachment (STEP406 of FIG. 3). Thus, for example, as illustrated on the left side in FIG. 4, when the work machine 10 is destroying a building, the bucket 145 is imaged diagonally from above by the imaging unit 410 mounted on the unmanned aircraft 40. The captured image data representing the captured image is transmitted to the work machine 10 by the aircraft control unit 400 through the wireless communication unit 402 (STEP408 of FIG. 3).

In the work machine 10, the captured image data is received by the work machine control unit 20 through the wireless communication unit 202 (STEP202 of FIG. 3). By the work machine control unit 20, an environmental image based on the captured image data (all or a part of the captured image itself or a simulated environmental image generated on the basis thereof) is displayed on the image output unit 222 (STEP204 of FIG. 3). Thus, for example, as illustrated on the right side in FIG. 4, an environmental image including the bucket 145 when the work machine 10 is destroying the building is displayed on the image output unit 222.

The work machine control unit 20 recognizes the relative position of the unmanned aircraft 40 with reference to the working mechanism 140 (STEP206 of FIG. 3). For example, by referring to an image database on the basis of the shape and the size of each of the bucket 145, the arm 143, and the boom 141 in the captured image, the relative position of the unmanned aircraft 40 with reference to a specified location of each of the bucket 145, the arm 143, and the boom 141 is estimated. A marker of a predetermined shape may be attached to a specified location of each of the bucket 145, the arm 143, and the boom 141, and the relative position of the unmanned aircraft 40 may be estimated with reference to the specified location of each of the bucket 145, the arm 143, and the boom 141 by referring to the image database on the basis of the shapes and the sizes of the markers in the captured image. A ranging image sensor or a TOF sensor may be mounted on the unmanned aircraft 40, and the relative position of the unmanned aircraft 40 with reference to the specified location of each of the bucket 145, the arm 143, and the boom 141 may be estimated on the basis of the ranging data acquired through the sensor.

The work machine control unit 20 recognizes the control mode of each of the operating levers, which constitute the operating mechanism 211, selected by the operator (STEP208 of FIG. 3).

In the work machine control unit 20, the contact possibility recognition element 21 determines whether the possibility of contact between the working mechanism 140 and the unmanned aircraft 40 is low on the basis of the relative position of the unmanned aircraft 40 with reference to one or a plurality of specified locations of the working mechanism 140 and the control mode of each of the operating levers constituting the operating mechanism 211 selected by the operator (STEP210 of FIG. 3). For example, even if the operation mode of the working mechanism 140 or the like as a working mechanism according to the control mode of the operating mechanism 211 is an operation mode that brings the specified location closer to the unmanned aircraft 40, it is determined that the possibility of contact between the working mechanism 140 and the unmanned aircraft 40 is low as long as the interval between a specified location of the working mechanism 140 and the unmanned aircraft 40 is equal to or more than a predetermined value.

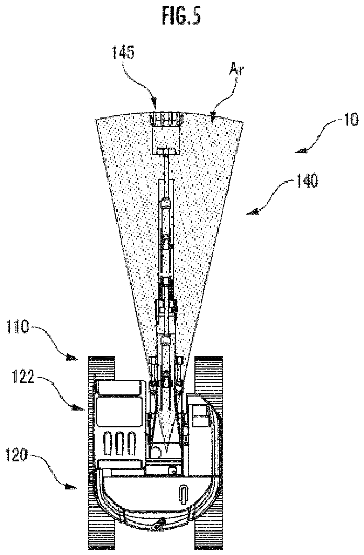

The degree of possibility of contact between the working mechanism 140 and the unmanned aircraft 40 may alternatively be recognized according to whether the real space position of the unmanned aircraft 40 is included in a reference space determined on the basis of the overall attitude of the working mechanism 140. The term "reference space" is defined such that the reference space includes a space that the working mechanism 140 or a part thereof occupies or passes through in a specified period of time when the upper pivoting body 120 pivots with respect to the lower traveling body 110. For example, as illustrated in FIG. 5, a reference space Ar is defined such that the reference space Ar includes a space that the working mechanism 140 or a part thereof occupies or passes through when the upper pivoting body 120 pivots clockwise or counterclockwise with respect to the lower traveling body 110. The overall attitude of the working mechanism 140 and the mode of extension thereof in a vertical direction and the longitudinal direction can be estimated on the basis of the measurement result of the angle of each of the coupling mechanism (or the joint mechanism) for the upper pivoting body 120 and the boom 141, the coupling mechanism for the boom 141 and the arm 143, and the coupling mechanism for the arm 143 and the bucket 145.

The central angle of the reference space Ar having a substantially fan-shaped cross section corresponds to a pivotable angle of the upper pivoting body 120 with respect to the lower traveling body 110 in a specified period of time. In a situation in which the upper pivoting body 120 is pivoting counterclockwise with respect to the lower traveling body 110, the reference space Ar may be defined such that the angle in the counterclockwise direction is larger than the angle in the clockwise direction, i.e., such that the reference space Ar is asymmetrical with reference to the working mechanism 140.

If it is recognized that the possibility of contact between the working mechanism 140 and the unmanned aircraft 40 is low (YES in STEP210 of FIG. 3), then the stay permission notification element 22 notifies the unmanned aircraft of the permission to continue to stay in place (STEP 212 of FIG. 3). Thus, for example, the unmanned aircraft 40 stays (hovers) there after receiving the notice of permission to continue to stay in place (STEP411 of FIG. 3).

If it is recognized that the possibility of contact between the working mechanism 140 and the unmanned aircraft 40 is high (NO in STEP210 of FIG. 3), then the contact avoidance operation control element 23 transmits a specified signal to the unmanned aircraft 40 (STEP 211 of FIG. 3). The "specified signal" is a signal for changing the flight mode of the unmanned aircraft 40, and may include a signal which merely indicates that there is a high possibility of contact with the working mechanism 140 or a command signal instructing a change of the relative position with reference to the working mechanism 140.

Moreover, in a case where it is recognized that the contact possibility between the working mechanism 140 and the unmanned aircraft 40 will be high (NO in STEP210 of FIG.3), the working mechanism 10 changes a current operation mode of at least one of the lower traveling body 110, the upper pivoting body 120, and the working mechanism 140 so that the lower traveling body 110, the upper pivoting body 120 of the .working mechanism 10 and/or the motion of the working mechanism 140 may be controlled.

In the unmanned aircraft 40, the aircraft control unit 400 receives the specified signal through the wireless communication unit 402 (STEP410 of FIG. 3). Thus, for example, the movements of a plurality of blades are controlled such that the interval between the unmanned aircraft 40 and a specified location on the working mechanism 140 increases, i.e. the unmanned aircraft 40 moves away from the working mechanism 140 (STEP412 of FIG. 3). A flight mode may be preferentially selected, in which the unmanned aircraft 40 ascends from there by making use of the characteristics as a rotorcraft.

When the specified signal is transmitted to the remote control unit 50, the reception of the specified signal or a guidance on an operation mode that is effective for moving the unmanned aircraft 40 away from the working mechanism 140 may be displayed on an output interface constituting the remote control unit 50, and the operator may be notified of the change of the operation mode through an input interface of the remote control unit 50 according to the displayed information.

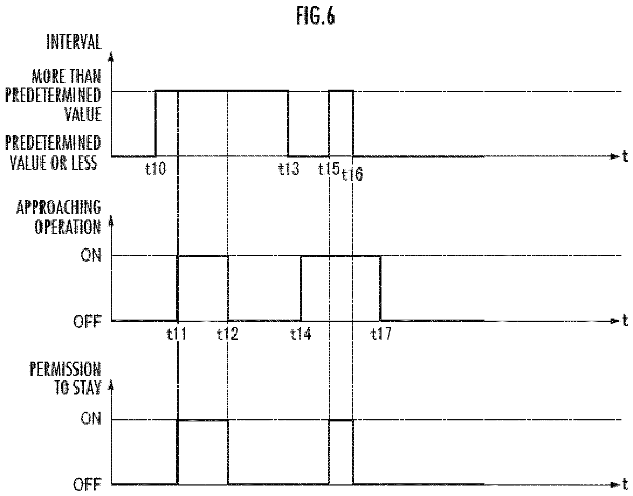

A case will be discussed, where, for example, the interval between a specified location of the working mechanism 140 and the unmanned aircraft 40 exceeds a predetermined value during each of the periods of time t = t₁₀ ∼ t₁₃ and t = t₁₅ ∼ t₁₆ as illustrated in the upper stage of FIG. 6, and the operation mode of the working mechanism 140 or the like is an operation mode in which the interval between the specified location and the unmanned aircraft 40 decreases in each of the periods of time t = t₁₁ ∼ t₁₂ (t₁₀ < t₁₁, t₁₂ < t₁₃) and t = t₁₄ ∼ t₁₇ (t₁₄ < t₁₅, t₁₆ < t₁₇) as illustrated in the middle stage of FIG. 6. In this case, as illustrated in the lower stage of FIG. 6, the stay of the unmanned aircraft 40 is permitted in each of the periods of time t = t₁₁ ∼ t₁₂ and t = t₁₅ ∼ t₁₆ during which the interval between the specified location of the working mechanism 140 and the unmanned aircraft 40 exceeds the predetermined value, and the operation mode of the working mechanism 140 or the like is an operation mode for approaching to the unmanned aircraft 40.

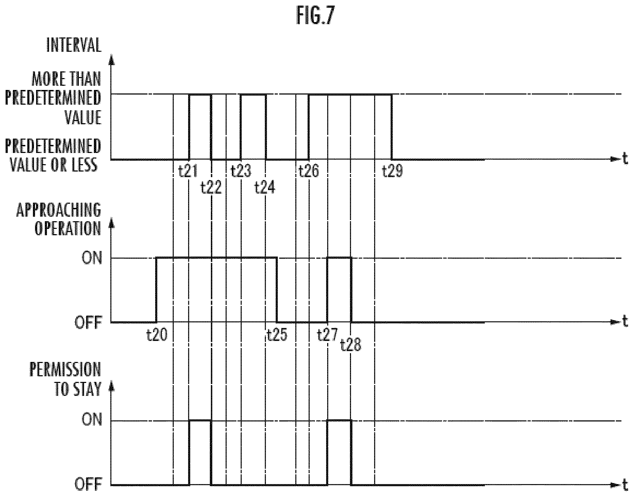

A case will be discussed, where, for example, the interval between a specified location of the working mechanism 140 and the unmanned aircraft 40 exceeds a predetermined value during each of the periods of time t = t₂₁ ∼ t₂₂ and t = t₂₃ ∼ t₂₄ and t = t₂₆ ∼ t₂₉ as illustrated in the upper stage of FIG. 7, and the operation mode of the working mechanism 140 or the like is an operation mode in which the interval between the specified location and the unmanned aircraft 40 decreases in each of the periods of time t = t₂₀ ∼ t₂₅ (t₂₀ < t₂₁, t₂₄ < t₂₅) and t = t₂₇ ∼ t₂₈ (t₂₆ < t₂₇, t₂₈ < t₂₉) as illustrated in the middle stage of FIG. 7. In this case, as illustrated in the lower stage of FIG. 7, the unmanned aircraft 40 is permitted to hover in each of the periods of time t = t₂₁ ∼ t₂₂ and t = t₂₇ ∼ t₂₈ during which the interval between the specified location of the working mechanism 140 and the unmanned aircraft 40 exceeds a predetermined value, and the operation mode of the working mechanism 140 or the like is an operation mode for approaching to the unmanned aircraft 40.

### (Effect)

If it is recognized that the possibility of contact between the working mechanism 140 constituting the work machine 10 having the configuration and the unmanned aircraft 40 is low, then the unmanned aircraft is notified of the permission to continue to stay in place, thereby making it possible to continue to provide suitable images for the operator of the excavator who performs work while watching captured images taken by the imaging unit 410 mounted on the unmanned aircraft (refer to FIG. 6 and FIG. 7).

### (Other embodiments of the present invention)

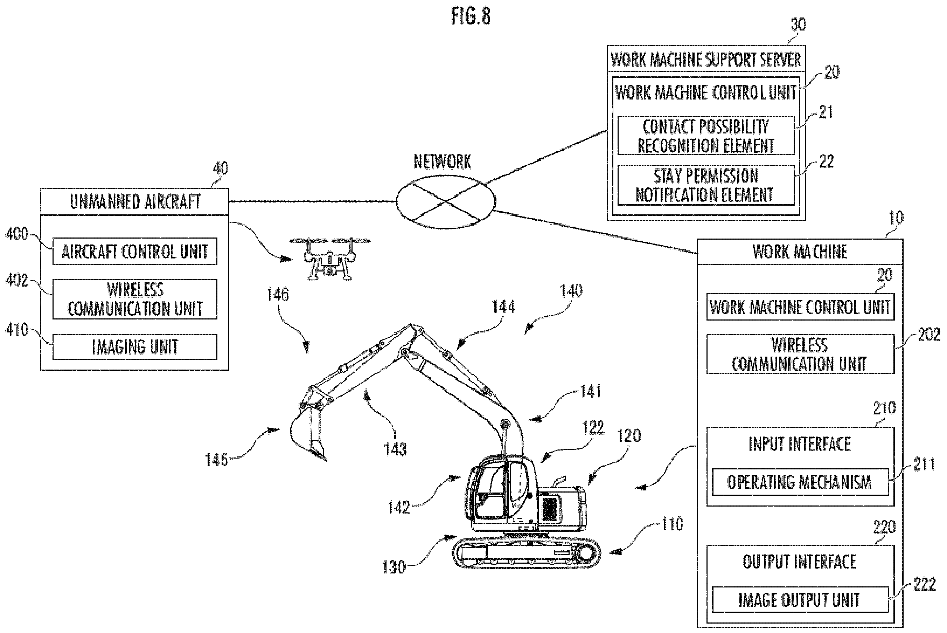

A work machine support server 30 as one embodiment of the present invention illustrated in FIG. 8 has a function for communicating with each of a work machine 10 and an unmanned aircraft 40. The work machine support server 30 includes a contact possibility recognition element 21 and a stay permission notification element 22. In this case, a work machine control unit 20 may not have such functions as the contact possibility recognition element 21 and the stay permission notification element 22.

According to the work machine support server 30 having the configuration, if the contact possibility recognition element 21 recognizes that the possibility of contact between a working mechanism 140 and the unmanned aircraft 40 is low, then the unmanned aircraft is permitted to stay in place. With this arrangement, an imaging unit 410 mounted on the unmanned aircraft 40 continues to capture images while staying in place, thus making it possible to continue to provide suitable images for an operator of an excavator who performs work while watching captured images taken by the imaging unit 410 mounted on the unmanned aircraft (refer to FIG. 3, FIG. 6, and FIG. 7).

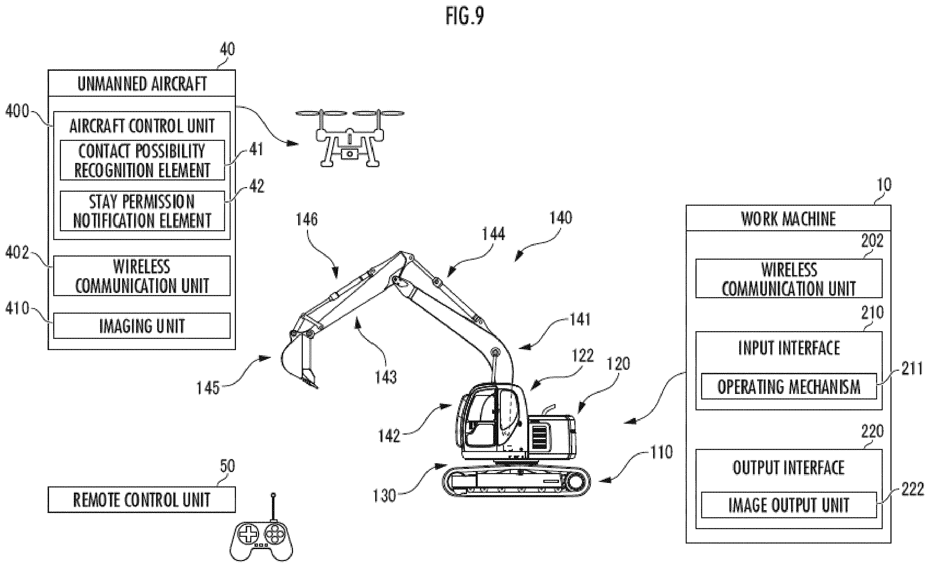

An unmanned aircraft 40 (aircraft control unit 400) as an embodiment of the present invention illustrated in FIG. 9 includes a contact possibility recognition element 41 and a stay permission notification element 42. In this case, a work machine control unit 20 may not have such functions as the contact possibility recognition element 41 and the stay permission notification element 42.

According to the unmanned aircraft 40 having the configuration, if the contact possibility recognition element 41 recognizes that the possibility of contact between the working mechanism 140 and the unmanned aircraft 40 is low, then the unmanned aircraft is permitted to continue to stay in place. Therefore, an imaging unit 410 mounted on the unmanned aircraft 40 continues to capture images while staying there, thus making it possible to continue to provide suitable images for an operator of an excavator who performs work while watching captured images taken by the imaging unit 410 mounted on the unmanned aircraft (refer to FIG. 3, FIG. 6, and FIG. 7).

### Description of Reference Numerals

10 .. work machine; 20 .. work machine control unit; 21 .. contact possibility recognition element; 22 .. stay permission notification element; 30 .. work machine support server; 40 .. unmanned aircraft; 202 .. wireless communication unit; 210 .. input interface; 211 .. operating mechanism; 220 .. output interface; 222 .. image output unit; 140 .. working mechanism (work attachment); 400 .. aircraft control unit; 402 .. wireless communication unit; and 410 .. imaging unit.

## Claims

1. A work machine comprising: a lower traveling body; an upper pivoting body that can pivot with respect to the lower traveling body; a working mechanism that extends from the upper pivoting body; and a control unit that controls an operation mode of each of the lower traveling body, the upper pivoting body, and the working mechanism,
wherein the control unit includes:
a contact possibility recognition element that recognizes a degree of possibility of contact between the working mechanism and an unmanned aircraft based on a relative position of the unmanned aircraft with reference to the working mechanism; and
a stay permission notification element which notifies the unmanned aircraft of a permission to continue to stay in place in a case where the contact possibility recognition element recognizes that the contact possibility is low.

2. The work machine according to claim 1
wherein the contact possibility recognition element recognizes a state of change in the possibility of contact between the working mechanism and the unmanned aircraft based on the state of change in the relative position of the unmanned aircraft with reference to the working mechanism according to the operation mode of at least one of the lower traveling body, the upper pivoting body, and the working mechanism, and
in a case where the contact possibility recognition element recognizes that the contact possibility will be high, the stay permission notification element changes a current operation mode of at least one of the lower traveling body, the upper pivoting body, and the working mechanism.

3. The work machine according to claim 1 or 2,
wherein the contact possibility recognition element recognizes a spread state of a reference space encompassing a space that the working mechanism occupies or passes through in a specified period of time based on an operation mode of at least one of the lower traveling body, the upper pivoting body, and the working mechanism in the specified period of time, and recognizes that the contact possibility is low in a case where a real space position of the unmanned aircraft is not included in the reference space.

4. A work machine support server having a function for communicating with each of a work machine and an unmanned aircraft, the work mechanism including a lower traveling body, an upper pivoting body that can pivot with respect to the lower traveling body, a working mechanism that extends from the upper pivoting body, and a control unit that controls an operation mode of each of the lower traveling body, the upper pivoting body, and the working mechanism, comprising:
a contact possibility recognition element which recognizes a degree of possibility of contact between the working mechanism and the unmanned aircraft based on a relative position of the unmanned aircraft with reference to the working mechanism according to communication with at least one of the work machine and the unmanned aircraft; and
a stay permission notification element which notifies the unmanned aircraft of a permission to continue to stay in place in a case where the contact possibility recognition element recognizes that the contact possibility is low.
